# FASCICULE DE BREVET EUROPEEN

(11) **EP 2 067 979 B1**
(45) Date de publication et mention de la délivrance du brevet: **17.02.2010**
(21) Numéro de dépôt: 08291140.5
(22) Date de dépôt: 03.12.2008
(51) Int. Cl.: F02M 35/12, F01N 13/00, F04B 39/00, F16L 55/033

(54) **Dispositif d'atténuation acoustique pour ligne d'admission d'un moteur thermique, et ligne d'admission l'incorporant**
Sound attenuation device for the intake line of an internal combustion engine and intake line including same
Schalldämpfer für Zuführleitung einer Brennkraftmaschine und Zuführleitung, die diesen Schalldämpfer umfasst

(30) Priorité: 05.12.2007 FR 0708486
(43) Date de publication de la demande: 10.06.2009
(73) Titulaire: Hutchinson, 75008 Paris (FR)
(72) Inventeur: Caliskan, Alper, 45140 St Jean de la Ruelle (FR)
(74) Mandataire: Bolinches, Michel Jean-Marie

(56) Documents cités:
- EP-A- 1 255 071
- EP-A1- 1 865 188
- WO-A-97/09527
- DE-A1- 19 956 172
- US-A- 4 244 442

## Description

La présente invention concerne un dispositif d'atténuation acoustique en particulier pour une ligne d'admission d'un moteur thermique à combustion interne, tel qu'un moteur turbocompressé pour véhicule automobile, et une telle ligne d'admission l'incorporant.

De manière connue, les dispositifs d'atténuation acoustique de lignes d'admission pour moteur turbocompressé de véhicule automobile comportent une enveloppe tubulaire radialement externe qui est destinée à être parcourue par un fluide gazeux sous pression, et avec les portions d'extrémités de laquelle est solidarisée une structure de conduite radialement interne formant deux chambres annulaires de résonance avec deux renflements respectifs de l'enveloppe.

On peut par exemple citer le document DE-A1-199 56 172 pour la description d'un tel dispositif, dans lequel les deux renflements de l'enveloppe sont reliés entre eux par un rétrécissement radial périphérique dont est solidaire un tronçon médian de la structure de conduite interne, laquelle comporte deux autres tronçons d'extrémité respectivement solidaires des deux portions d'extrémité de l'enveloppe.

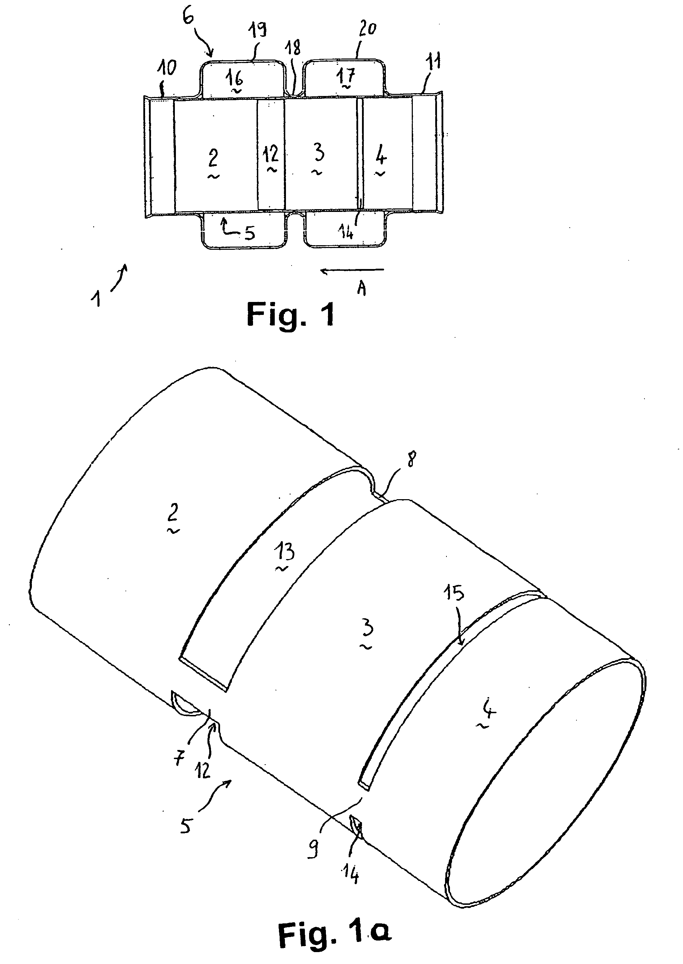

Les figures 1 et 1a annexées à la présente description illustrent un exemple de dispositif 1 connu de ce type, dans lequel les trois tronçons cylindriques 2, 3 et 4 de la structure de conduite interne 5 qui sont axialement juxtaposés à l'intérieur de l'enveloppe 6 sont dans cet exemple reliés deux à deux entre eux par une paire de pattes axiales 7 et 8, 9 diamétralement opposées et de largeur circonférentielle réduite (le sens de circulation du fluide gazeux sous pression est représenté par la flèche A à la figure 1). Comme visible à la figure 1, les deux tronçons d'extrémité 2 et 4 de la structure 5 sont fixés aux portions d'extrémité 10 et 11 respectives de l'enveloppe 6, et chacun de ces tronçons 2 et 4 est séparé du tronçon médian 3 par deux lumières 12 et 13 dans un cas, et par deux fentes 14 et 15, dans l'autre cas (il est également possible de prévoir des fentes ou lumières identiques de part et d'autre du tronçon médian 3). Dans l'exemple de la figure 1a, les fentes et lumières 12 à 15 présentent chacune une forme sensiblement en demi-cercle, étant formées de part et d'autre des pattes axiales 7 et 8, 9.

Comme illustré à la figure 1, les deux chambres annulaires 16 et 17 ainsi formées de part et d'autre du rétrécissement 18 formé entre les deux renflements 19 et 20 communiquent entre elles de manière indirecte par l'espace intérieur au tronçon médian 3, et elles définissent ainsi deux fréquences de résonance du dispositif 1 qui sont notamment définies par les volumes des chambres 16 et 17 ainsi que par la position et la largeur axiales du couple [lumières 12 et 13 / fentes 14 et 15].

Un inconvénient majeur de ces dispositifs d'atténuation connus à fentes et/ou lumières réside dans leur coût de fabrication relativement élevé, en raison du nombre important de paramètres dimensionnels à gérer dû à cette pluralité de fentes et/ou lumières agencées de part et d'autre du rétrécissement de l'enveloppe.

Un autre inconvénient de ces dispositifs connus réside dans leurs performances acoustiques qui peuvent laisser à désirer, tant pour les basses fréquences que pour les hautes fréquences.

Le document EP-A1-1 255 071 présente un dispositif d'atténuation acoustique selon le préambule de la revendication 1 annexée à la présente description.

Un but de la présente invention est de proposer un dispositif d'atténuation acoustique qui remédie à ces inconvénients, en particulier pour une ligne d'admission d'un moteur thermique à combustion interne, tel qu'un moteur turbocompressé pour véhicule automobile, ce dispositif étant destiné à être parcouru par un fluide gazeux sous pression et comportant :
- une enveloppe tubulaire radialement extérieure qui présente deux portions d'extrémité respectivement d'entrée et de sortie du fluide, et au moins deux renflements périphériques qui s'étendent radialement vers l'extérieur à partir desdites portions d'extrémité respectives et qui sont reliés deux à deux entre eux par un rétrécissement radial périphérique, et
- une structure de conduite au moins en partie radialement intérieure à l'enveloppe qui est solidaire de ces portions d'extrémité et qui est en communication fluide avec l'intérieur de chaque renflement de sorte à délimiter une chambre annulaire de résonance avec ce renflement, la structure de conduite étant axialement discontinue et comprenant au moins deux tronçons cylindriques indépendants deux à deux axialement juxtaposés de part et d'autre d'un espace axial de séparation qui s'étend sur une section radiale de l'enveloppe, les chambres respectivement formées par les renflements communiquant deux à deux entre elles, radialement entre le ou chaque rétrécissement et la structure de conduite, par cet espace de séparation formé en regard du ou de chaque rétrécissement.

A cet effet, un dispositif selon l'invention est tel que l'un au moins de ces tronçons présente une extrémité circonférentielle axialement interne qui est en saillie radialement vers l'extérieur en se prolongeant à l'intérieur de la chambre de résonance correspondante, la ou chaque extrémité en saillie étant destinée à modifier la propagation des ondes acoustiques à l'intérieur de l'enveloppe.

On notera que cette communication fluide entre chambres de résonance, qui se traduit par un passage direct pour le fluide d'une chambre à l'autre au contact de la face radialement interne du ou de chaque rétrécissement, jointe à cette extrémité axialement interne en saillie pour le(s) tronçon(s) de conduite, permet de manière surprenante d'améliorer de manière significative les performances acoustiques du dispositif d'atténuation pour les hautes et basses fréquences, en comparaison des dispositifs connus tels que ceux selon les figures 1 et 1a ci-jointes qui ne prévoient pas ce passage direct du fluide entre chambres de résonance, et ceux selon le document précité EP-A1-1 255 071 qui ne prévoient pas une telle extrémité de tronçon se prolongeant dans la chambre formée par le renflement en regard.

On notera également qu'un dispositif d'atténuation selon l'invention peut ainsi comprendre avantageusement, au droit du ou de chaque rétrécissement, un seul espace axial de séparation entre les deux tronçons adjacents, contrairement à certains dispositifs connus qui prévoient au droit du rétrécissement un troisième tronçon supplémentaire, qui est séparé des deux tronçons adjacents fixés à l'enveloppe par deux espaces axiaux de séparation qui sont axialement décalés par rapport à ce rétrécissement.

On notera en outre que l'utilisation de seulement deux tronçons axialement de part et d'autre du ou de chaque rétrécissement, en lieu et place des trois tronçons utilisés dans les dispositifs de l'art antérieur tels que ceux des figures 1 et 1a, procure une économie de matière qui contribue à la réduction du coût de fabrication des dispositifs de l'invention en comparaison de ces dispositifs connus à trois tronçons.

Selon une autre caractéristique de l'invention, ladite ou chaque extrémité de tronçon en saillie est évasée et/ou recourbée radialement vers l'extérieur, étant élastiquement déformable par écrasement au contact de la portion d'extrémité correspondante de l'enveloppe de manière à permettre le coulissement, radialement à l'intérieur de cette portion, du ou de chaque tronçon de conduite ayant cette extrémité en saillie.

On notera que cette extrémité en saillie de forme évasée, recourbée ou encore évasée puis recourbée dont peut être pourvu le ou chaque tronçon de conduite intégré au dispositif d'atténuation permet d'améliorer l'atténuation acoustique par la modification précitée de la propagation des ondes acoustiques, et que sa structure élastiquement déformable lors de cet écrasement peut être obtenue en utilisant le même matériau que pour le reste des tronçons de conduite ou un matériau différent.

Selon une autre caractéristique de l'invention, l'un au moins des deux tronçons de conduite solidaires desdites portions d'extrémité de l'enveloppe peut être pourvu de moyens de connexion étanche à un conduit de raccordement, tel qu'un embout rigide de ladite ligne d'admission (par exemple une extrémité d'un turbocompresseur), ces moyens de connexion comprenant :
- une épingle transversale circonférentielle solidarisant par clipage ce tronçon avec la portion d'extrémité correspondante, cette épingle étant montée de manière traversante dans les parois de ce tronçon et de cette portion d'extrémité, de manière adjacente à l'extrémité axialement externe du tronçon, et
- au moins un joint annulaire d'étanchéité monté coaxialement à l'épingle de manière adjacente à l'extrémité axialement interne du tronçon,
le ou chaque conduit de raccordement étant alors destiné à être monté en appui contre ce joint radialement à l'intérieur de ce tronçon.

Avantageusement, la paroi dudit ou de chaque tronçon de conduite pourvu desdits moyens de connexion étanche peut présenter :
- des lumières espacées dans la direction circonférentielle qui sont formées de manière traversante dans cette paroi et dans celle en regard de ladite ou chaque portion d'extrémité correspondante, pour recevoir ladite épingle en un emplacement axialement externe de ce tronçon de diamètre maximal pour ce dernier, et
- une gorge circonférentielle qui reçoit ledit joint, de préférence de type joint à lèvre, et qui est formée en un emplacement axialement interne de ce tronçon de diamètre minimal pour ce dernier, cette gorge étant reliée audit emplacement externe recevant l'épingle par une rampe sensiblement tronconique.

Avantageusement, l'un au moins des deux tronçons de conduite qui sont solidaires des portions d'extrémité de l'enveloppe s'étend en regard du renflement correspondant suivant une paroi pouvant être (à l'exception de ladite extrémité en saillie de ce tronçon) :
- sensiblement cylindrique, ou bien en variante
- formée de plusieurs segments sensiblement cylindriques reliés deux à deux entre eux par un segment sensiblement tronconique.

Selon un exemple particulier de réalisation de l'invention, ledit ou chaque tronçon de conduite à extrémité en saillie peut avoir cette extrémité qui est fendue à intervalles réguliers sur sa circonférence par des fentes axiales formant une pluralité de languettes d'extrémité élastiques pour ce tronçon qui sont recourbées sur elles-mêmes de manière séparée les unes des autres, ces fentes étant aptes à améliorer l'élasticité radiale du ou de chaque tronçon les incorporant en vue de son montage dans l'enveloppe et à améliorer la performance acoustique du dispositif.

Selon un premier mode de réalisation de l'invention, ledit ou chaque tronçon de conduite à extrémité en saillie a cette extrémité qui est évasée en pénétrant dans ladite chambre correspondante avec un angle d'évasement de préférence compris entre 10° et 80°.

Selon un second mode de réalisation de l'invention, ledit ou chaque tronçon de conduite à extrémité en saillie a cette extrémité qui pénètre dans ladite chambre correspondante en étant recourbée selon un angle de recourbement de préférence compris entre 10° et 90°, ce recourbement prolongeant optionnellement axialement vers l'extérieur un segment évasé de ce tronçon.

Avantageusement, lesdits tronçons de conduite peuvent présenter chacun une paroi continue (i.e. continûment fermée, étant dépourvue d'ouvertures, fentes ou lumières).

Selon un exemple préférentiel de réalisation de l'invention concernant spécifiquement un dispositif d'atténuation à deux chambres de résonance, ladite structure de conduite est exclusivement constituée de deux tronçons de conduite respectivement solidaires desdites portions d'extrémité (ces deux tronçons définissant entre eux ledit espace axial de séparation).

Avantageusement, le dispositif selon l'invention peut être tel que chacun de ces deux tronçons de conduite qui constituent sa structure de conduite a son extrémité axialement interne en saillie radiale dans la chambre correspondante (i.e. les extrémités internes respectives des deux tronçons étant chacune indépendamment évasée et/ou recourbée), et a son extrémité axialement externe qui est soudée ou brasée sur la portion d'extrémité correspondante de l'enveloppe.

En variante, ce dispositif de l'invention peut être tel que l'un au moins de ces deux tronçons de conduite a son extrémité axialement interne qui est en saillie radiale dans la chambre correspondante (i.e. l'extrémité interne d'un seul ou de chaque tronçon étant évasée et/ou recourbée indépendamment de l'autre), et son extrémité axialement externe qui est pourvue desdits moyens de connexion étanche audit conduit de raccordement.

Selon une autre caractéristique de l'invention, le dispositif d'atténuation est destiné à une ligne d'admission d'un moteur turbocompressé de véhicule automobile, et chacune des chambres s'étend alors de préférence sur une longueur axiale comprise entre 25 mm et 30 mm.

Dans ce cas, l'enveloppe peut avantageusement présenter un diamètre maximal inférieur ou égal à 80 mm, mesuré sur la face radialement externe de l'un au moins desdits renflements. Quant à la longueur axiale de l'enveloppe, elle peut être comprise entre 90 mm et 110 mm, et la longueur axiale totale de ladite structure de conduite (espace axial de séparation inclus) peut alors être comprise entre 70 mm et 90 mm.

Avantageusement, chacun des tronçons de conduite peut présenter un diamètre interne compris entre 40 mm et 43 mm et la ou chaque extrémité en saillie peut dépasser radialement dans ladite chambre correspondante selon une hauteur radiale de dépassement comprise entre 1 mm et 5 mm.

Egalement avantageusement, l'extrémité en saillie du ou de chaque tronçon de conduite présente un bord circonférentiel axialement interne qui est axialement distant de la paroi radiale axialement interne du renflement correspondant d'une distance pouvant être comprise entre 2 mm et 10 mm (le ou chaque rétrécissement de l'enveloppe étant défini par la réunion de deux parois radiales axialement internes des renflements).

On notera qu'il est possible de faire varier au choix la position axiale et/ou la largeur axiale de l'espace de séparation formé entre les deux tronçons de conduite selon l'invention, ainsi que le volume de l'une ou des deux chambres de résonances (ces volumes pouvant être choisis identiques ou différents), afin d'obtenir une atténuation acoustique satisfaisante dans des conditions déterminées de fonctionnement.

Selon une autre caractéristique de l'invention, le dispositif d'atténuation est avantageusement réalisé en un matériau métallique.

Une ligne d'admission selon l'invention d'un moteur thermique à combustion interne, tel qu'un moteur turbocompressé pour véhicule automobile, comporte au moins un dispositif d'atténuation acoustique selon l'invention tel que défini ci-dessus.

D'autres avantages, caractéristiques et détails de l'invention ressortiront du complément de description qui va suivre en référence à des dessins annexés, donnés uniquement à titre d'exemples et dans lesquels :
la figure 1 est une vue en section axiale d'un dispositif d'atténuation à deux chambres de résonance selon l'art antérieur, formé d'une structure de conduite connue à trois tronçons fixée à l'intérieur d'une enveloppe tubulaire,
la figure 1a est une vue en perspective de la structure de conduite connue de la figure 1,
la figure 2 est une vue latérale et en perspective d'un dispositif d'atténuation selon l'invention également à deux chambres de résonance, formé d'une enveloppe tubulaire selon la figure 1 à l'intérieur de laquelle est fixée une structure de conduite selon l'invention à deux tronçons indépendants,
la figure 3 est une vue en demi-coupe axiale et partiellement en perspective de l'intérieur d'un dispositif de la figure 2, où ces deux tronçons présentent tous deux des extrémités internes recourbées selon un mode de réalisation de l'invention,
la figure 4 est une vue en demi-coupe axiale et partiellement en perspective de l'intérieur d'un tronçon équipé de moyens de connexion étanche selon un exemple de réalisation d'une structure de conduite de l'invention,
la figure 5 est une vue en demi-coupe axiale et partiellement en perspective de l'intérieur d'un dispositif selon l'invention dont le tronçon de gauche est selon la figure 4 et celui de droite est droit et à extrémité interne évasée,
la figure 6 est une vue en demi-coupe axiale et partiellement en perspective de l'intérieur d'un dispositif selon l'invention dont le tronçon de gauche est selon la figure 4 et celui de droite est droit et à extrémité interne évasée puis recourbée selon une variante de la figure 5,
la figure 7 est une vue en demi-coupe axiale et partiellement en perspective de l'intérieur d'un dispositif selon l'invention dont le tronçon de gauche est selon la figure 4 et celui de droite est en « escalier » et à extrémité interne évasée puis recourbée selon une autre variante de la figure 5,
la figure 8 est une vue en demi-coupe axiale et partiellement en perspective de l'intérieur d'un dispositif selon l'invention dont le tronçon de gauche est selon la figure 4 et celui de droite est droit et à extrémité interne fendue et recourbée, selon une variante de la figure 6,
la figure 9 est une vue en demi-coupe axiale et partiellement en perspective de l'intérieur d'un dispositif de l'invention dont chacun des deux tronçons est droit et à extrémité interne fendue et recourbée, selon une variante de la figure 8,
la figure 10 est une demi-vue schématique en coupe axiale d'un dispositif selon l'invention à extrémités internes de tronçons évasées puis recourbées, sur les extrémités duquel sont assemblés deux conduits de raccordement d'une ligne d'admission de fluide selon l'invention,
la figure 11 est une demi-vue schématique en coupe axiale montrant à une plus grande échelle la géométrie évasée puis recourbée de chaque extrémité interne de tronçon du dispositif de la figure 10, et
la figure 12 est une demi-vue schématique partielle et en coupe axiale montrant trois phases initiale, intermédiaire et finale d'insertion selon l'invention d'un tronçon à extrémité recourbée à l'intérieur d'une enveloppe d'un dispositif selon la figure 3.

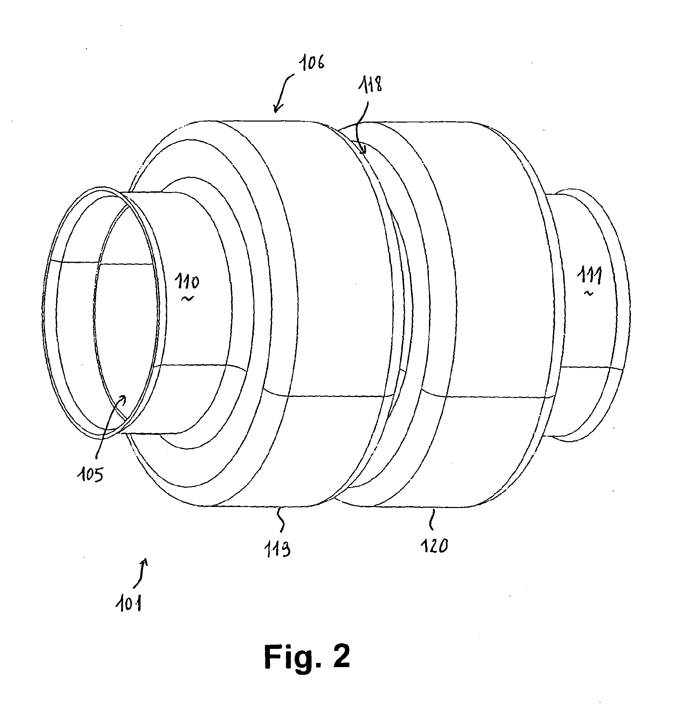

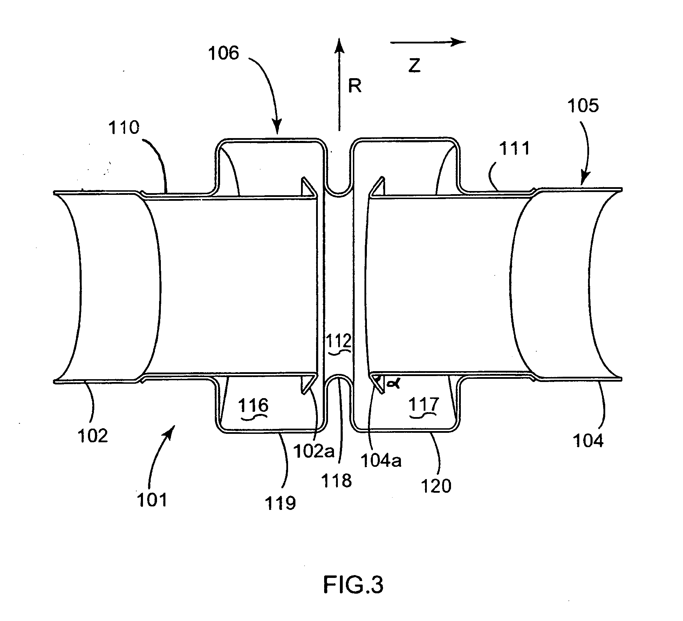

Un dispositif 101 selon l'invention est représenté, vu de l'extérieur, à la figure 2. A l'instar de la figure 1, ce dispositif 101 est formé d'une enveloppe tubulaire 106 radialement externe qui est destinée à être parcourue par un fluide gazeux sous pression, et avec les portions d'extrémités 110 et 111 de laquelle est solidarisée (de préférence par soudage, brasage ou pinçage) une structure de conduite 105 radialement interne formant deux chambres annulaires de résonance 116 et 117 (voir figure 3) avec deux renflements respectifs 119 et 120 de l'enveloppe 106 reliés entre eux par un rétrécissement radial 118 périphérique.

Comme illustré à la figure 3, la structure de conduite 105 est exclusivement constituée de deux tronçons 102 et 104 indépendants (i.e. sans liaison mécanique mutuelle) qui présentent chacun une paroi fermée cylindrique et qui sont juxtaposés de manière indépendante dans la direction axiale Z de l'enveloppe 106, axialement de part et d'autre du rétrécissement 118. En d'autres termes, ces deux tronçons 102 et 104 sont séparés entre eux par un espace de séparation axial 112 qui fait communiquer directement les deux chambres 116 et 117 entre elles par la face interne circonférentielle du rétrécissement 118 et qui est agencé en regard de ce dernier.

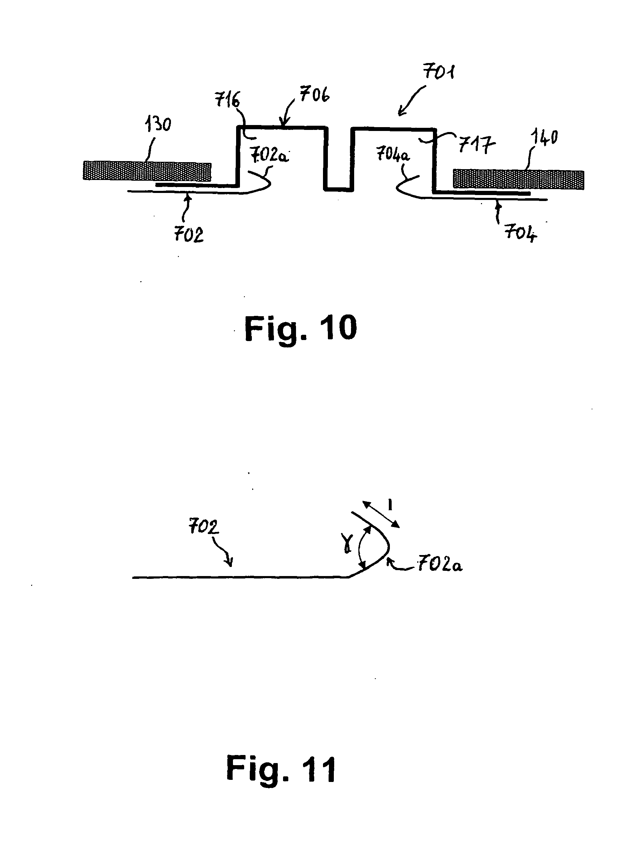

Les tronçons 102 et 104 font partie intégrante du dispositif 101, étant intégrés à ce dernier avant montage du dispositif 101 dans la ligne d'admission de fluide dont les deux conduits de raccordement 130 et 140 sont par exemple visibles à la figure 10. Ces conduits 130 et 140 sont solidarisés par exemple par soudage, brasage ou pinçage avec les faces radialement externes respectives des portions d'extrémité 110 et 111 de l'enveloppe 106.

Dans l'exemple de la figure 3, les deux tronçons 102 et 104 présentent chacun une extrémité circonférentielle axialement interne 102a, 104a recourbée radialement vers l'extérieur en se prolongeant à l'intérieur de la chambre correspondante 116, 117, de sorte que chaque extrémité 102a, 104a soit élastiquement déformable par écrasement au contact de la portion d'extrémité correspondante 110, 111 de l'enveloppe 106 pour permettre le coulissement, radialement à l'intérieur de cette portion 110, 111, de chaque tronçon de conduite 102, 104, et également de sorte à modifier la propagation des ondes acoustiques à l'intérieur de l'enveloppe 106. Comme visible à la figure 3, chaque extrémité recourbée 102a, 104a est formée par un bord s'étendant radialement et axialement vers l'extérieur (i.e. en sens inverse à partir d'un point de rebroussement) en formant un angle aigu α avec la partie adjacente du tronçon 102, 104.

Dans cet exemple de réalisation, l'espace de séparation 112 n'est pas centré axialement sur le fond du rétrécissement 118. En effet, les deux tronçons 102 et 104 présentent un même diamètre dans la direction radiale R de l'enveloppe, mais des longueurs axiales différentes selon la direction Z, pour une fixation à des distances sensiblement identiques des ouvertures d'extrémité des portions 110 et 111 de l'enveloppe 106.

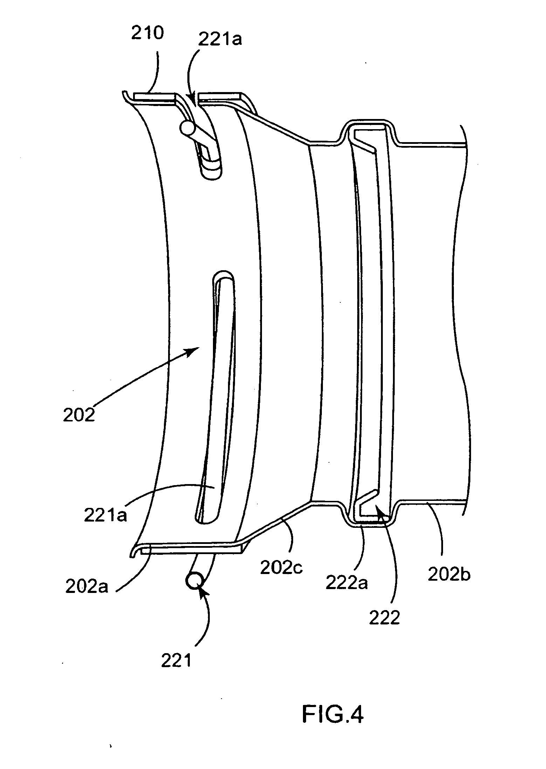

La figure 4 montre, en variante du soudage, brasage ou pinçage selon les figures 3 et 10 des deux portions d'extrémité 110 et 111 de l'enveloppe 106, d'une part, avec les deux conduits de raccordement 130 et 140 et, d'autre part, avec les deux tronçons internes 102 et 104, un autre exemple de solidarisation des portions d'extrémités 210 et 211 de l'enveloppe 206 avec les conduits de raccordement (non visibles) et avec l'un au moins des deux tronçons 202 d'un dispositif 201 selon l'invention. Comme visible aux figures 3 et 4, le tronçon 202 est pourvu de moyens de connexion 221, 222 étanche au conduit de raccordement correspondant qui est monté radialement à l'intérieur et au contact de ce tronçon 202, ces moyens de connexion 221, 222 comprenant :
- une épingle transversale circonférentielle 221 solidarisant par clipage ce tronçon 202 avec la portion d'extrémité 210, l'épingle 221 étant montée dans des lumières 221a traversantes qui sont formées de manière espacée dans les parois de ce tronçon 202 et de cette portion d'extrémité 210 et qui sont localisées dans un emplacement axialement externe 202a du tronçon 202 cylindrique et de diamètre maximal pour celui-ci, et
- un joint annulaire d'étanchéité 222 par exemple de type à lèvre) monté coaxialement à l'épingle 221 dans une gorge circonférentielle 222a localisée dans un emplacement axialement interne 202b du tronçon 202 qui présente un diamètre minimal pour ce dernier et qui est relié à l'emplacement externe 202a par une rampe tronconique 202c, le conduit de raccordement étant destiné à être monté en appui contre ce joint 222 radialement à l'intérieur du tronçon 202.

Ces moyens de connexion 221, 222 permettent d'assurer un raccordement simple et fiable de l'enveloppe 206 (sans soudure ni brasure) avec le ou chaque tronçon 202 qui en est pourvu et avec le conduit de raccordement correspondant, tel qu'un embout rigide du turbocompresseur.

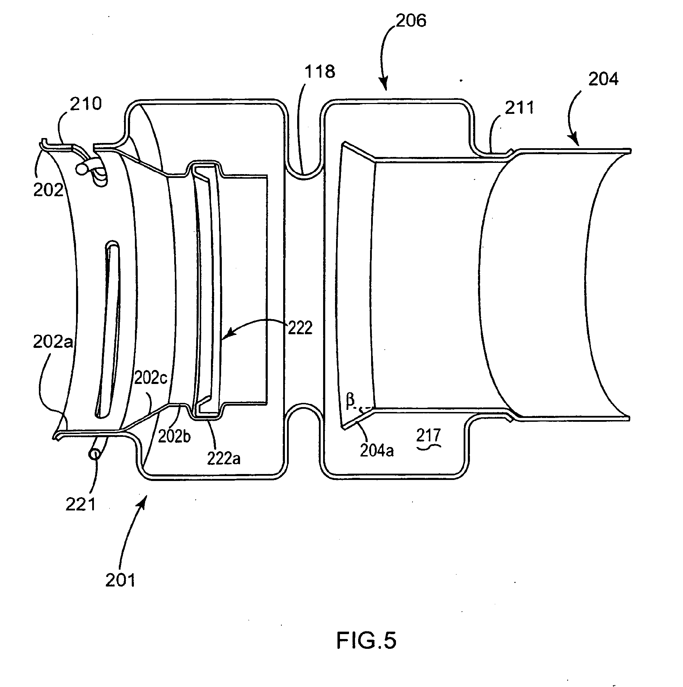

Dans l'exemple de la figure 5, l'autre tronçon 204 se différencie uniquement du tronçon 104 de la figure 3, en ce que son extrémité circonférentielle 204a n'est pas recourbée mais évasée radialement vers l'extérieur, en se prolongeant dans le même sens (i.e. sans rebroussement) axialement vers l'intérieur selon un angle aigu β et à l'intérieur de la chambre 217 correspondante (à proximité immédiate du rétrécissement 118 de l'enveloppe 206).

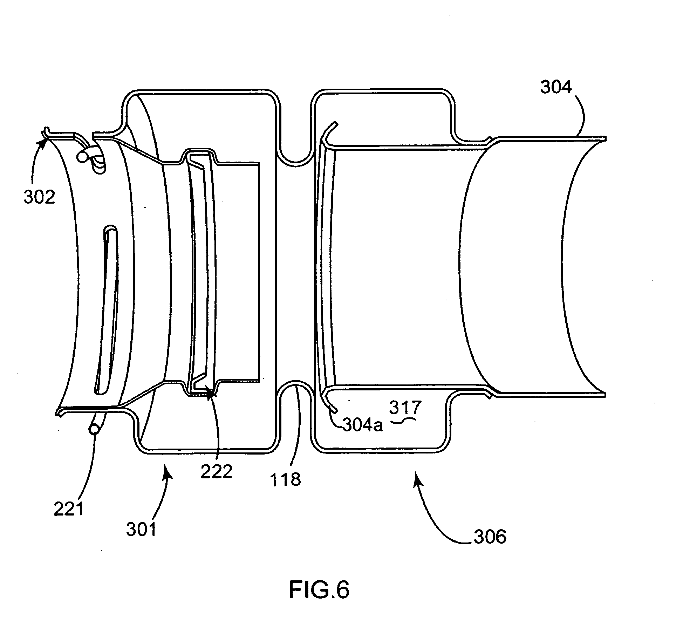

Le dispositif 301 selon la variante de la figure 6 se distingue uniquement de celui de la figure 5, en ce que le tronçon 304 faisant face au tronçon 302 pourvu des moyens de connexion 221, 222 (identique au tronçon 202) a son extrémité circonférentielle 304a qui est d'abord évasée radialement vers l'extérieur (dans cet exemple par deux segments tronconiques d'évasement croissant) puis recourbée en sens inverse (dans cet exemple avec un recourbement sensiblement arrondi ou en plusieurs segments) à l'intérieur de la chambre 317 correspondante et à proximité immédiate du rétrécissement 118 de l'enveloppe 306.

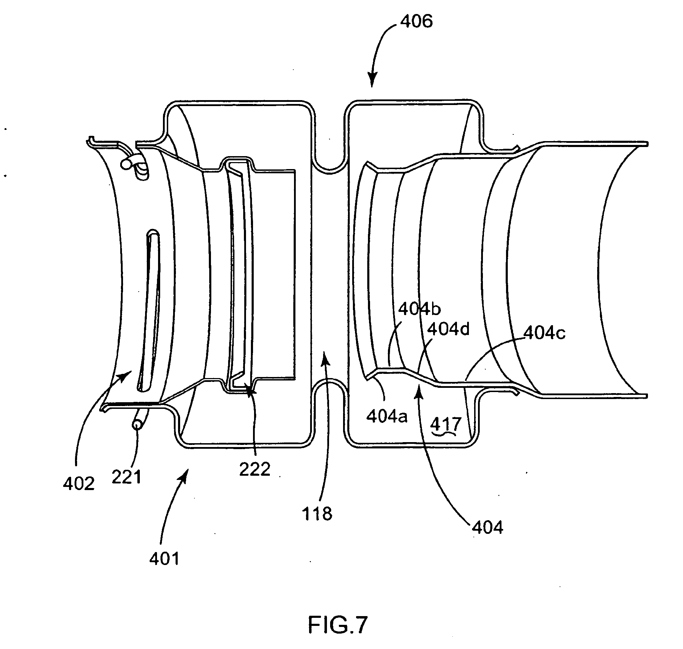

Le dispositif 401 selon la variante de la figure 7 se distingue uniquement de celui de la figure 5, en ce que le tronçon 404 faisant face au tronçon 402 pourvu des moyens de connexion 221, 222 (identique au tronçon 202) et ayant son extrémité circonférentielle évasée 404a est formé non pas d'une paroi globalement cylindrique comme à la figure 5, mais de deux segments cylindriques 404b et 404c reliés entre eux dans la chambre 417 par un segment tronconique 404d se terminant par l'extrémité 404a.

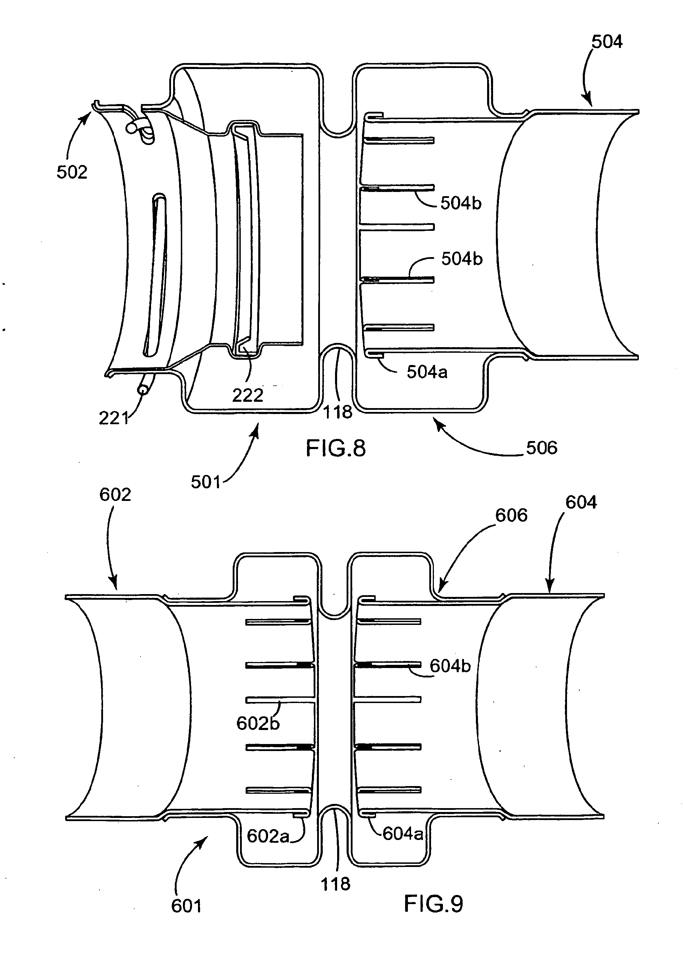

Le dispositif 501 selon la variante de la figure 8 se distingue uniquement de celui de la figure 6, en ce que le tronçon 504 faisant face au tronçon 502 pourvu des moyens de connexion 221, 222 (identique au tronçon 202) a son extrémité circonférentielle 504a recourbée qui forme une collerette fendue et aplatie (i.e. recourbée en étant sensiblement repliée sur elle-même). Comme visible à la figure 8, l'extrémité 504a est fendue à intervalles réguliers sur sa circonférence par des fentes axiales 504b formant des languettes d'extrémité élastiques pour ce tronçon 504 séparément recourbées sur elles-mêmes, ces fentes 504b permettant d'améliorer la performance acoustique du dispositif 501 et l'élasticité radiale du tronçon 504 en vue de son montage dans l'enveloppe 506.

Le dispositif 601 selon la variante de la figure 9 se distingue uniquement de celui de la figure 8, en ce que les deux tronçons 602 et 604 sont chacun identiques au tronçon 504, présentant ainsi chacun une extrémité circonférentielle 602a, 604a fendue à intervalles réguliers par des fentes 602b, 604b et recourbée sur elle-même. Comme précédemment en relation avec les figures 3 et 5 à 8, on notera que les extrémités circonférentielles respectives 102a à 602a et 104a à 604a des deux tronçons 102 à 602, 104 à 604 sont de préférence situées à proximité immédiate du rétrécissement 118 de l'enveloppe 106 à 606 correspondante.

Le dispositif 701 selon l'invention schématiquement illustré dans la variante de la figure 10 a ses deux tronçons 702 et 704 dont les extrémités axialement internes respectives 702a et 704a sont d'abord évasées puis recourbées, à l'instar du tronçon 304a de la figure 6. Sont en outre visibles sur cette figure les deux conduits de raccordement 130 et 140 qui raccordent le dispositif 701 à la ligne d'admission de fluide, et qui sont sont solidarisés par exemple par soudage, brasage ou pinçage avec les faces radialement externes respectives de l'enveloppe 706.

La figure 11 détaille la forme sensiblement en « V » avec un angle aigu y, mesuré entre ses deux branches respectivement évasée et recourbée. La branche recourbée se prolonge sur une longueur I à l'intérieur de la chambre de résonance 716, 717 correspondante.

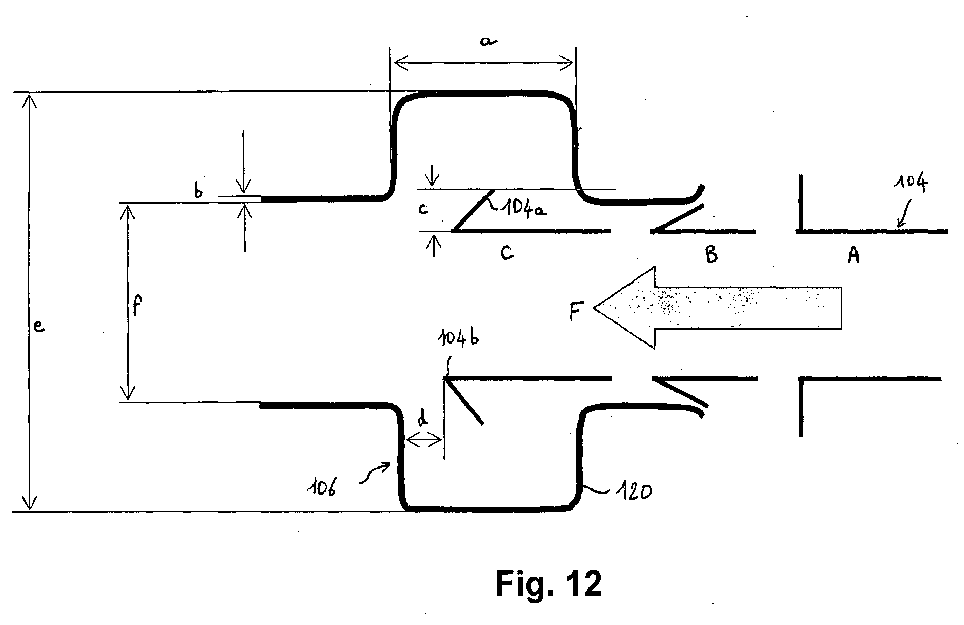

La figure 12 illustre trois phases A, B et C respectivement initiale, intermédiaire et finale d'insertion, par exemple, en référence au dispositif 101 de la figure 3, d'un tronçon 104 à extrémité recourbée déformable 104a à l'intérieur de l'enveloppe 106, montrant l'écrasement radial de cette extrémité 104a lors de son coulissement axial selon la direction F, contre la portion d'extrémité 111 de l'enveloppe 106.

A titre exemplatif et nullement limitatif, les distances a à f identifiées à la figure 12 peuvent prendre les valeurs suivantes :
- longueur axiale a de chaque chambre 116, 117 définie par un renflement 119, 120 : environ 28 mm,
- épaisseur radiale b de l'enveloppe 106 : environ 1 mm,
- hauteur radiale c de chaque extrémité recourbée 102a, 104a du tronçon 102, 104 : cette hauteur est telle que cette extrémité pénètre dans la chambre 116, 117 selon un dépassement radial allant de 1 mm à 5 mm,
- espacement axial d entre le bord axialement interne 104b de chaque extrémité recourbée 102a, 104a et la paroi adjacente du renflement 119, 120 : entre 2 mm et 10 mm,
- diamètre maximal e de l'enveloppe 106 à l'emplacement de chaque renflement 119, 120 : environ 76 mm, et
- diamètre externe f de chaque tronçon 102, 104 : environ 46 mm (son diamètre interne variant de 40 mm à 43 mm).

On notera que cette structure déformable des extrémités 102a à 702a et 104a à 704a lors de cet écrasement peut être obtenue en utilisant le même matériau (rigide et de préférence métallique) que pour le reste des tronçons 102 à 702 et 104 à 704, ou bien un matériau différent, tel qu'un matériau souple par exemple élastomère.

## Revendications

1. Dispositif d'atténuation acoustique (101, 201, 301, 401, 501, 601, 701) en particulier pour une ligne d'admission d'un moteur thermique à combustion interne, tel qu'un moteur turbocompressé pour véhicule automobile, ce dispositif étant destiné à être parcouru par un fluide gazeux sous pression et comportant :
- une enveloppe tubulaire (106, 206, 306, 406, 506, 606, 706) radialement extérieure qui présente deux portions d'extrémité (110 et 111, 210 et 211) respectivement d'entrée et de sortie du fluide, et au moins deux renflements périphériques (119 et 120) qui s'étendent radialement vers l'extérieur à partir desdites portions d'extrémité respectives et qui sont reliés deux à deux entre eux par un rétrécissement radial (118) périphérique, et
- une structure de conduite (105) au moins en partie radialement intérieure à l'enveloppe qui est solidaire desdites portions d'extrémité et qui est en communication fluide avec l'intérieur de chaque renflement de sorte à délimiter une chambre annulaire de résonance (116, 716 et 117, 217, 317, 417, 717) avec ce renflement, cette structure étant discontinue dans la direction axiale (Z) et comprenant au moins deux tronçons cylindriques (102, 202, 302, 402, 502, 602, 702 et 104, 204, 304, 404, 504, 604, 704) indépendants deux à deux axialement juxtaposés de part et d'autre d'un espace axial de séparation (112) qui s'étend sur une section radiale de l'enveloppe, les chambres respectivement formées par les renflements communiquant deux à deux entre elles, radialement entre ledit ou chaque rétrécissement et la structure de conduite, par ledit espace de séparation qui est formé en regard dudit ou de chaque rétrécissement,
**caractérisé en ce que** l'un au moins de ces tronçons présente une extrémité circonférentielle axialement interne qui est en saillie (102a, 104a, 204a, 304a, 404a, 504a, 602a, 604a, 702a, 704a) radialement vers l'extérieur en se prolongeant à l'intérieur de la chambre de résonance correspondante, la ou chaque extrémité en saillie étant destinée à modifier la propagation des ondes acoustiques à l'intérieur de l'enveloppe.

2. Dispositif (101, 201, 301, 401, 501, 601, 701) selon la revendication 1, **caractérisé en ce que** ladite ou chaque extrémité de tronçon en saillie (102a, 104a, 204a, 304a, 404a, 504a, 602a, 604a, 702a, 704a) est évasée et/ou recourbée radialement vers l'extérieur, étant élastiquement déformable par écrasement au contact de la portion d'extrémité correspondante (110, 111, 210, 211) de l'enveloppe (106 à 706) de manière à permettre le coulissement, radialement à l'intérieur de cette portion, du ou de chaque tronçon de conduite (102, 104, 204, 304, 404, 504, 604, 702, 704) ayant cette extrémité en saillie.

3. Dispositif (201, 301, 401, 501) selon la revendication 1 ou 2, **caractérisé en ce que** l'un au moins des deux tronçons de conduite (202 à 502) solidaires desdites portions d'extrémité de l'enveloppe (210 et 211) est pourvu de moyens de connexion étanche (221 et 222) à un conduit de raccordement, tel qu'un embout rigide de ladite ligne d'admission, ces moyens de connexion comprenant :
- une épingle transversale circonférentielle (221) solidarisant par clipage ce tronçon avec la portion d'extrémité correspondante, cette épingle étant montée de manière traversante dans les parois de ce tronçon et de cette portion d'extrémité, de manière adjacente à l'extrémité axialement externe du tronçon, et
- au moins un joint annulaire d'étanchéité (222) monté coaxialement à cette épingle de manière adjacente à l'extrémité axialement interne de ce tronçon,
le ou chaque conduit de raccordement étant destiné à être monté en appui contre ce joint radialement à l'intérieur de ce tronçon.

4. Dispositif (201, 301, 401, 501) selon la revendication 3, **caractérisé en ce que** la paroi dudit ou de chaque tronçon de conduite (202 à 502) pourvu desdits moyens de connexion étanche (221, 222) présente :
- des lumières (221 a) espacées dans la direction circonférentielle qui sont formées de manière traversante dans cette paroi et dans celle en regard de ladite ou chaque portion d'extrémité (210, 211) correspondante, pour recevoir ladite épingle (221) en un emplacement axialement externe (202a) de ce tronçon de diamètre maximal pour ce dernier, et
- une gorge circonférentielle (222a) qui reçoit ledit joint (222), de préférence de type joint à lèvre, et qui est formée en un emplacement axialement interne (202b) de ce tronçon de diamètre minimal pour ce dernier, cette gorge étant reliée audit emplacement externe recevant l'épingle par une rampe sensiblement tronconique (202c).

5. Dispositif (101, 201, 301, 501, 601) selon une des revendications précédentes, **caractérisé en ce que** l'un au moins des deux tronçons de conduite (102, 104, 204, 304, 504, 602, 604) qui sont solidaires desdites portions d'extrémité (110 et 111, 210 et 211) de l'enveloppe (106, 206, 306, 506, 606) s'étend en regard dudit renflement (119, 120) correspondant suivant une paroi sensiblement cylindrique, à l'exception de ladite extrémité en saillie (102a, 104a, 204a, 304a, 504a, 602a, 604a) de ce tronçon.

6. Dispositif (401) selon une des revendications 1 à 4, **caractérisé en ce que** l'un au moins des deux tronçons de conduite (404) qui sont solidaires desdites portions d'extrémité (110 et 111) de l'enveloppe (406) s'étend en regard dudit renflement (119, 120) correspondant suivant une paroi formée de plusieurs segments sensiblement cylindriques (404b et 404c) reliés deux à deux entre eux par un segment sensiblement tronconique (404d), à l'exception de ladite extrémité en saillie (404a) de ce tronçon.

7. Dispositif (501, 601) selon une des revendications précédentes, **caractérisé en ce que** ledit ou chaque tronçon de conduite à extrémité en saillie (504, 602, 604) a cette extrémité (504a, 602a, 604a) qui est fendue à intervalles réguliers sur sa circonférence par des fentes axiales (504b, 602b, 604b) formant une pluralité de languettes d'extrémité élastiques pour ce tronçon qui sont recourbées sur elles-mêmes de manière séparée les unes des autres, ces fentes étant aptes à améliorer l'élasticité radiale du ou de chaque tronçon les incorporant en vue de son montage dans l'enveloppe (506, 606) et à améliorer la performance acoustique du dispositif.

8. Dispositif (201, 401) selon une des revendications 1 à 6, **caractérisé en ce que** ledit ou chaque tronçon de conduite à extrémité en saillie (204, 404) a cette extrémité (204a, 404a) qui est évasée en pénétrant dans ladite chambre (217, 417) correspondante avec un angle d'évasement (β) de préférence compris entre 10° et 80°.

9. Dispositif (101, 301, 501, 601, 701) selon une des revendications 1 à 7, **caractérisé en ce que** ledit ou chaque tronçon de conduite à extrémité en saillie (102, 104, 304, 504, 602, 604, 702, 704) a cette extrémité qui pénètre dans ladite chambre (116, 716 et 117, 317, 717) correspondante en étant recourbée selon un angle de recourbement (α) de préférence compris entre 10° et 90°, ce recourbement prolongeant optionnellement axialement vers l'extérieur un segment évasé (304a, 704a) de ce tronçon.

10. Dispositif (101, 201, 301, 401, 501, 601, 701) selon une des revendications précédentes, **caractérisé en ce que** ladite structure de conduite (105) est exclusivement constituée de deux tronçons de conduite (102 à 702 et 104 à 704) respectivement solidaires desdites portions d'extrémité (110 et 111, 210 et 211), cette structure de conduite et l'enveloppe (106, 206, 306, 406, 506, 606, 706) étant de préférence réalisées en un matériau métallique.

11. Dispositif (101, 601, 701) selon la revendication 1 ou 2 et selon la revendication 10, **caractérisé en ce que** chacun de ces deux tronçons de conduite (102, 104, 602, 604, 702, 704) a son extrémité axialement interne (102a, 104a, 602a, 604a, 702a, 704a) qui est en saillie radialement dans la chambre (116, 117, 716, 717) correspondante, et son extrémité axialement externe qui est soudée ou brasée sur la portion d'extrémité (110, 111) correspondante de l'enveloppe (106, 606, 706).

12. Dispositif (201, 301, 401, 501) selon la revendication 3 ou 4 et selon la revendication 10, **caractérisé en ce que** l'un au moins de ces deux tronçons de conduite (204, 304, 404, 504) a son extrémité axialement interne (204a, 304a, 404a, 504a) qui est en saillie radialement dans la chambre (217, 317, 417) correspondante, et son extrémité axialement externe qui est pourvue desdits moyens de connexion étanche (221, 222) audit conduit de raccordement.

13. Dispositif (101, 201, 301, 401, 501, 601, 701)) selon une des revendications 10 à 12 pour ligne d'admission d'un moteur turbocompressé de véhicule automobile, **caractérisé en ce que** chacune desdites chambres (116, 716 et 117, 217, 317, 417, 717) s'étend sur une longueur axiale (a) comprise entre 25 mm et 30 mm.

14. Dispositif (101, 201, 301, 401, 501, 601, 701) selon une des revendications précédentes, **caractérisé en ce que** chacun desdits tronçons de conduite (102 à 702 et 104 à 704) présente un diamètre interne compris entre 40 mm et 43 mm et **en ce que** ladite ou chaque extrémité en saillie (102a, 104a, 204a, 304a, 404a, 504a, 602a, 604a, 702a, 704a) dépasse radialement à l'intérieur de ladite chambre correspondante (116, 716 et 117, 217, 317, 417, 717) selon une hauteur radiale de dépassement comprise entre 1 mm et 5 mm.

15. Dispositif (101, 201, 301, 401, 501, 601) selon une des revendications précédentes, le ou chaque rétrécissement (118) de l'enveloppe (106 à 606) étant défini par la réunion de deux parois radiales axialement internes desdits renflements (119 et 120) correspondants, **caractérisé en ce que** ladite extrémité en saillie (102a, 104a, 204a, 304a, 404a, 504a, 602a, 604a) dudit ou de chaque tronçon de conduite (102, 202, 302, 402, 502, 602 et 104, 204, 304, 404, 504, 604) présente un bord circonférentiel axialement interne (104b) qui est axialement distant de la paroi radiale axialement interne du renflement correspondant d'une distance (d) comprise entre 2 mm et 10 mm.

16. Ligne d'admission d'un moteur thermique à combustion interne, tel qu'un moteur turbocompressé pour véhicule automobile, **caractérisée en ce qu'**elle comporte au moins un dispositif d'atténuation acoustique (101, 201, 301, 401, 501, 601, 701) selon une des revendications précédentes.

## Claims

1. Sound deadening device (101 to 701), particularly for an inlet line of an internal combustion engine, such as a turbocharged engine for a motor vehicle, this device being intended to have a pressurized gaseous fluid passed through it and comprising:
- a radially outer tubular casing (106 to 706) which has two end portions (110 and 111, 210 and 211), these respectively being the fluid inlet and outlet portions, and at least two peripheral bulges (119 and 120) which extend radially outwards from the said respective end portions and which are connected together, two by two by a peripheral radial narrowing (118), and
- a pipe structure (105) at least partially radially internal to the casing, which is secured to the said end portions and which is in fluid communication with the inside of each bulge so as to delimit with this bulge an annular resonance chamber (116, 716 and 117, 217, 317, 417, 717), this structure being discontinuous in the axial direction (Z) and comprising at least two cylindrical sections (102 to 702 and 104 to 704) independent two by two and axially juxtaposed on each side of a separating axial space (112) which extends over a radial section of the casing, the chambers respectively formed by the bulges communicating with one another two by two, radially between the said or each narrowing and the pipe structure, via the said separating space which is formed facing the said or each narrowing,
**characterized in that** at least one of these sections has an axially internal circumferential end which projects (102a, 104a, 204a, 304a, 404a, 504a, 602a, 604a, 702a, 704a) radially outwards extending into the corresponding resonance chamber, the or each projecting end being intended to modify the propagation of acoustic waves within the casing.

2. Device (101 to 701) according to Claim 1, **characterized in that** the said or each projecting section end (102a, 104a, 204a, 304a, 404a, 504a, 602a, 604a, 702a, 704a) is flared and/or curled radially outwards, being elastically deformable by crushing upon contact with the corresponding end portion (110, 111, 210, 211) of the casing (106 to 706) so as to allow the or each pipe section (102, 104, 204, 304, 404, 504, 604, 702, 704) that has this projecting end to slide radially inside this portion.

3. Device (201 to 501) according to Claim 1 or 2, **characterized in that** at least one of the two pipe sections (202 to 502) secured to the said casing end portions (210 and 211) is provided with means of sealed connection (221 and 222) to a connecting pipe, such as a rigid end piece of the said inlet line, these means of connection comprising:
- a circumferential transverse pin (221) which by clipping secures this section to the corresponding end portion, this pin being mounted such that it passes through the walls of this section and of this end portion, adjacent to the axially external end of the section, and
- at least one annular seal (222) mounted coaxial with this pin adjacent to the axially internal end of this section,
the or each connecting pipe being intended to be mounted pressed against this seal radially on the inside of this section.

4. Device (201 to 501) according to Claim 3, **characterized in that** the wall of the said or of each pipe section (202 to 502) provided with the said means of sealed connection (221, 222) has:
- slots (221a) spaced in the circumferential direction and formed such that they pass through this wall and through the wall facing it belonging to the said or each corresponding end portion (210, 211) so as to accept the said pin (221) at an axially external location (202a) of this section at which the latter has its maximum diameter, and
- a circumferential groove (222a) which accepts the said seal (222), preferably of the lip seal type, and which is formed at an axially internal location (202b) of this section at which the latter has its minimum diameter, this groove being connected to the said external location that accepts the pin by a substantially frustoconical incline (202c).

5. Device (101, 201, 301, 501, 601) according to one of the preceding claims, **characterized in that** at least one of the two pipe sections (102, 104, 204, 304, 504, 602, 604) which are secured to the said end portions (110 and 111, 210 and 211) of the casing (106, 206, 306, 506, 606) extends facing the said corresponding bulge (119, 120) along a wall which is substantially cylindrical with the exception of the said projecting end (102a, 104a, 204a, 304a, 504a, 602a, 604a) of this section.

6. Device (401) according to one of Claims 1 to 4, **characterized in that** at least one of the two pipe sections (404) which are secured to the said end portions (110 and 111) of the casing (406) extends facing the said corresponding bulge (119, 120) along a wall formed of several substantially cylindrical segments (404b and 404c) connected together, two by two, by a substantially frustoconical segment (404d), with the exception of the said projecting end (404a) of this section.

7. Device (501, 601) according to one of the preceding claims, **characterized in that** the said or each pipe section with a projecting end (504, 602, 604) has this end (504a, 602a, 604a) split at regular intervals about its circumference by axial slits (504b, 602b, 604b) that form a plurality of elastic end fingers for this section which are curled over on themselves separately from one another, these slits being able to improve the radial elasticity of the or of each section that incorporates them so that it can be mounted in the casing (506, 606) and improve the acoustic performance of the device.

8. Device (201, 401) according to one of Claims 1 to 6, **characterized in that** the said or each pipe section with a projecting end (204, 404) has this end (204a, 404a) flared entering the said corresponding chamber (217, 417) at a flare angle (β) preferably ranging between 10° and 80°.

9. Device (101, 301, 501, 601, 701) according to one of Claims 1 to 7, **characterized in that** the said or each pipe section with a projecting end (102, 104, 304, 504, 602, 604, 702, 704) has this end entering the said corresponding chamber (116, 716 and 117, 317, 717) being curled over by a curl angle (α) preferably ranging between 10° and 90°, this curl optionally extending, axially outwards, a flared segment (304a, 704a) of this section.

10. Device (101 to 701) according to one of the preceding claims, **characterized in that** said pipe structure (105) consists exclusively of two pipe sections (102 to 702 and 104 to 704) respectively secured to the said end portions (110 and 111, 210 and 211), this pipe structure and the casing (106 to 706) preferably being made of a metallic material.

11. Device (101, 601, 701) according to Claim 1 or 2 and according to Claim 10, **characterized in that** each of these two pipe sections (102, 104, 602, 604, 702, 704) has its axially internal end (102a, 104a, 602a, 604a, 702a, 704a) projecting radially into the corresponding chamber (116, 117, 716, 717), and its axially external end welded or brazed to the corresponding end portion (110, 111) of the casing (106, 606, 706).

12. Device (201, 301, 401, 501) according to Claim 3 or 4 and according to Claim 10, **characterized in that** at least one of these two pipe sections (204, 304, 404, 504) has its axially internal end (204a, 304a, 404a, 504a) projecting radially into the corresponding chamber (217, 317, 417), and its axially external end provided with the said means of sealed connection (221, 222) to the said connecting pipe.

13. Device (101 to 701) according to one of Claims 10 to 12 for a motor vehicle turbocharged engine inlet line, **characterized in that** each of the said chambers (116, 716 and 117, 217, 317, 417, 717) extends over an axial length (a) ranging between 25 mm and 30 mm.

14. Device (101 to 701) according to one of the preceding claims, **characterized in that** each of the said pipe sections (102 to 702 and 104 to 704) has an internal diameter ranging between 40 mm and 43 mm, and **in that** the said or each projecting end (102a, 104a, 204a, 304a, 404a, 504a, 602a, 604a, 702a, 704a) protrudes radially into the said corresponding chamber (116, 716 and 117, 217, 317, 417, 717) over a radial protrusion height ranging between 1 mm and 5 mm.

15. Device (101 to 601) according to one of the preceding claims, the or each narrowing (118) of the casing (106 to 606) being defined by the meeting of two axially internal radial walls of the said corresponding bulges (119 and 120), **characterized in that** the said projecting end (102a, 104a, 204a, 304a, 404a, 504a, 602a, 604a) of the said or of each pipe section (102 to 602 and 104 to 604) has an axially internal circumferential edge (104b) which is axially distant from the axially internal radial wall of the corresponding bulge by a distance (d) ranging between 2 mm and 10 mm.

16. Inlet line for an internal combustion engine, such as a turbocharged engine, for a motor vehicle, **characterized in that** it comprises at least one sound deadening device (101 to 701) according to one of the preceding claims.

## Patentansprüche

1. Vorrichtung zur akustischen Dämpfung (101, 201, 301, 401, 501, 601, 701), insbesondere für eine Einlassleitung eines Verbrennungsmotors, wie z.B. ein Motor mit Turbokompression für ein Automobil, wobei diese Vorrichtung dazu bestimmt ist, von einem gasförmigen unter Druck stehenden Fluid durchlaufen zu werden, und umfasst:
- eine radial äußere röhrenartige Hülle (106, 206, 306, 406, 506, 606, 706), welche zwei Endabschnitte (110 und 111, 210 und 211) zum Einlass bzw. Auslass des Fluids und wenigstens zwei periphere Verdickungen (119, 120), welche sich ausgehend von den jeweiligen Endabschnitten radial nach außen erstrecken und paarweise untereinander durch eine periphere radiale Verengung (118) verbunden sind, und
- eine wenigstens teilweise radial innerhalb der Hülle befindliche Leitungsstruktur (105), welche mit den Endabschnitten fest verbunden ist und sich derart in Fluidverbindung mit dem Inneren jeder Verengung befindet, dass sie mit der Verengung eine ringförmige Resonanzkammer (116, 716 und 117, 217, 317, 417, 717) begrenzt, wobei diese Struktur in der axialen Richtung (Z) unterbrochen ist und wenigstens zwei unabhängige zylindrische Teilstücke (102, 202, 302, 402, 502, 602, 702 und 104, 204, 304, 404, 504, 604, 704) umfasst, welche paarweise auf beiden Seiten eines axialen Trennraums (112) nebeneinander liegen, der sich auf einem radialen Abschnitt der Hülle erstreckt, wobei die Kammern jeweils gebildet sind durch die Verdickungen, welche radial zwischen der oder jeder Verengung und der Leitungsstruktur, über den Trennraum, welcher gegenüber der oder jeder Verengung gebildet ist, paarweise miteinander in Verbindung stehen,
**dadurch gekennzeichnet, dass** wenigstens das eine dieser Teilstücke ein axial inneres Umfangsende aufweist, welches radial nach außen hervorsteht (102a, 104a, 204a, 304a, 404a, 504a, 602a, 604a, 702a, 704a), wobei es sich in das Innere der entsprechenden Resonanzkammer verlängert, wobei das oder jedes hervorstehende Ende dazu bestimmt ist, die Ausbreitung von Schallwellen in das Innere der Hülle zu modifizieren.

2. Vorrichtung (101, 201, 301, 401, 501, 601, 701) nach Anspruch 1, **dadurch gekennzeichnet, dass** das oder jedes hervorstehende Teilstückende ((102a, 104a, 204a, 304a, 404a, 504a, 602a, 604a, 702a, 704a) aufgeweitet und/oder radial nach außen gekrümmt ist, wobei es bei Kontakt des entsprechenden Endabschnitts (110, 111, 210, 211) der Hülle (106 bis 706) durch Einquetschung derart elastisch verformbar ist, dass das Gleiten radial in das Innere dieses Abschnitts des oder jedes Leitungsteilstücks (104, 204, 304, 404, 504, 604, 702, 704) mit diesem hervorstehenden Ende ermöglicht wird.

3. Vorrichtung (201, 301, 401, 501) nach Anspruch 1 oder 2, **dadurch gekennzeichnet, dass** wenigstens das eine der zwei mit den Endabschnitten der Hülle (210 und 211) fest verbundenen Leitungsteilstücken (202 bis 502) mit Mitteln zur abdichtenden Verbindung (221 und 222) mit einer Anschlussleitung, wie z.B. ein starres Ansatzstück der Einlassleitung, versehen ist, wobei diese Mittel zur Verbindung umfassen:
- eine transversale Umfangsspange (221), welche durch Einclippen dieses Teilstück mit dem entsprechenden Endabschnitt fest verbindet, wobei diese Spange derart angebracht ist, dass sie die Wände dieses Teilstücks und dieses Endabschnitts benachbart zu dem axial äußeren Ende des Teilstücks durchdringt, und
- wenigstens eine ringförmige Dichtung (222), welche koaxial zu der Spange benachbart zu dem axial inneren Ende des Teilstücks angebracht ist,
wobei die oder jede Anschlussleitung dazu bestimmt ist, in Anlehnung an dieser Dichtung radial in dem Inneren dieses Teilstücks angebracht zu werden.

4. Vorrichtung (201, 301, 401, 501) nach Anspruch 3, **dadurch gekennzeichnet, dass** die Wand des oder jedes mit den Mitteln zur abdichtenden Verbindung (221, 222) versehenen Leitungsteilstücks (202-502) aufweist:
- in der Umfangsrichtung beabstandete Kanäle (221a), welche derart ausgebildet sind, dass sie diese Wand und diejenige gegenüber dem oder jedem entsprechenden Endabschnitt (210, 211) durchdringen, um die Spange (221) an einer axial äußeren Stelle (202a) dieses Teilstücks mit für das letztere maximalem Durchmesser aufzunehmen, und
- eine Umfangskehle (222a), welche die Dichtung (222), vorzugsweise vom Lippendichtungstyp, aufnimmt und welche an einer axial inneren Stelle (202b) dieses Teilstücks mit für das letztere minimalem Durchmesser ausgebildet ist, wobei diese Kehle mit der die Spange aufnehmenden äußeren Stelle durch eine im Wesentlichen kegelstumpfförmige Rampe (202c) verbunden ist.

5. Vorrichtung (101, 201, 301, 401, 501, 601) nach einem der vorhergehenden Ansprüche, **dadurch gekennzeichnet, dass** wenigstens das eine der zwei Leitungsteilstücke (102, 104, 204, 304, 504, 602, 604), welche mit den Endabschnitten (110 und 111, 210 und 211) der Hülle (106, 206, 306, 506, 606) fest verbunden sind, sich gegenüber der entsprechenden Verdickung (119, 120) einer, mit Ausnahme des hervorstehenden Endes (102a, 104a, 204a, 304a, 504a, 602a, 604a) dieses Teilstücks, im Wesentlichen zylindrischen Wand folgend erstreckt.

6. Vorrichtung (401) nach einem Ansprüche 1 bis 4, **dadurch gekennzeichnet, dass** das eine der wenigstens zwei Leitungsteilstücke (404), welche mit den Endabschnitten (110 und 111) der Hülle (406) fest verbunden sind, sich gegenüber der entsprechenden Verdickung (119, 120), mit Ausnahme des hervorstehenden Endes (404a) dieses Teilstücks, einer Wand folgend erstreckt, welche aus mehreren im Wesentlichen zylindrischen Segmenten (404b und 404c) gebildet ist, die untereinander paarweise durch ein im Wesentlichen kegelstumpfförmiges Segment (404d) verbunden sind.

7. Vorrichtung (501, 601) nach einem der vorhergehenden Ansprüche, **dadurch gekennzeichnet, dass** das oder jedes Leitungsteilstück mit hervorstehendem Ende (504, 602, 604) dieses Ende (504a, 602a, 604a) aufweist, welches auf seinem Umfang in regelmäßigen Intervallen durch axiale Spalte (504b, 602b, 604b) unterteilt ist, wodurch eine Vielzahl von elastischen Endzungen für dieses Teilstück gebildet werden, welche auf voneinander separate Weise auf sich selbst gekrümmt sind, wobei diese Spalte dazu ausgestaltet sind, die radiale Elastizität des oder jedes sie beinhaltenden Teilstücks im Hinblick auf seine Anbringung in der Hülle (506, 606) zu verbessern und die akustische Leistungsfähigkeit der Vorrichtung zu verbessern.

8. Vorrichtung (201, 401) nach einem der Ansprüche 1 bis 6, **dadurch gekennzeichnet, dass** das oder jedes Leitungsteilstück mit hervorstehendem Ende (204, 404) dieses Ende (204a, 404a) aufweist, welches beim Eindringen in die entsprechende Kammer (217, 417) mit einem Aufweitungswinkel (β) aufgeweitet wird, welcher vorzugsweise zwischen 10° und 80° enthalten ist.

9. Vorrichtung (101, 301, 501, 601) nach einem der Ansprüche 1 bis 7, **dadurch gekennzeichnet, dass** das oder jedes Leitungsteilstück mit hervorstehendem Ende (102, 104, 304, 504, 602, 604, 702, 704) dieses Ende aufweist, welches in die entsprechende Kammer (116, 716 und 117, 317, 717) eindringt, wobei es gemäß einem Biegungswinkel (α) gebogen wird, welcher vorzugsweise zwischen 10° und 90° enthalten ist, wobei optional diese Biegung axial in Richtung des Äußeren eines aufgeweiteten Segments (304a, 704a) dieses Teilstücks verlängert ist.

10. Vorrichtung (101, 201, 301, 401, 501, 601, 701) nach einem der vorhergehenden Ansprüche, **dadurch gekennzeichnet, dass** die Leitungsstruktur (105) ausschließlich gebildet ist aus zwei Leitungsteilstücken (102 bis 702 und 104 bis 704), welche jeweils fest mit den Endabschnitten (110 und 111, 210 und 211) verbunden sind, wobei diese Leitungsstruktur und die Hülle (106, 206, 306, 406, 506, 606, 706) vorzugsweise aus einem metallischen Metall realisiert sind.

11. Vorrichtung (101, 601, 701) nach Anspruch 1 oder 2 und nach Anspruch 10, **dadurch gekennzeichnet, dass** jedes dieser zwei Leitungsteilstücke (102, 104, 602, 604, 702, 704) sein axial inneres Ende (102a, 104a, 602a, 604a, 702a, 704a), welches radial in der entsprechenden Kammer (116, 117, 716, 717) hervorsteht, und sein axial äußeres Ende, welches an den entsprechenden Endabschnitt (110, 111) der Hülle (106, 606, 706) geschweißt oder gelötet ist, aufweist.

12. Vorrichtung (201, 301, 401, 501) nach Anspruch 3 oder 4 und nach Anspruch 10, **dadurch gekennzeichnet, dass** wenigstens das eine dieser zwei Leitungsteilstücke (204, 304, 404, 504) sein axial inneres Ende (204a, 304a, 404a, 504a), welches radial in der entsprechenden Kammer (217, 317, 417) hervorsteht, und sein axial äußeres Ende, welches mit den Mitteln zur abdichtenden Verbindung (221, 222) mit der Anschlussleitung versehen ist, aufweist.

13. Vorrichtung (101, 201, 301, 401, 501, 601, 701) nach einem der Ansprüche 10 bis 12 für eine Einlassleitung eines Automobilmotors mit Turbokompression, **dadurch gekennzeichnet, dass** jede der Kammern (116, 716 und 117, 217, 317, 417, 717) sich über eine axiale Länge (a) erstreckt, welche zwischen 25 mm und 30 mm enthalten ist.

14. Vorrichtung (101, 201, 301, 401, 501, 601, 701) nach einem der vorhergehenden Ansprüche, **dadurch gekennzeichnet, dass** jedes der Leitungsteilstücke (102 bis 702 und 104 bis 704) einen Innendurchmesser aufweist, welcher zwischen 40 mm und 43 mm enthalten ist, und dass das oder jedes hervorstehende Ende (102a, 104a, 204a, 304a, 404a, 504a, 602a, 604a, 702a, 704a) radial in das Innere der entsprechenden Kammer (116, 716 und 117, 217, 317, 417, 717) mit einem radialen Überstand hervorsteht, welcher zwischen 1 mm und 5 mm enthalten ist.

15. Vorrichtung (101, 201, 301, 401, 501, 601) nach einem der vorhergehenden Ansprüche, wobei die oder jede Verengung (118) der Hülle (106 bis 606) definiert ist durch die Vereinigung von zwei axial inneren radialen Wänden der entsprechenden Verdickungen (119 und 120), **dadurch gekennzeichnet, dass** das hervorstehende Ende (102a, 104a, 204a, 304a, 404a, 504a, 602a, 604a) des oder jedes Leitungsteilstücks (102, 202, 302, 402, 502, 602 und 104, 204, 304, 404, 504, 604) einen axial inneren Umfangsrand (104b) aufweist, welcher axial von der axial inneren radialen Wand der entsprechenden Verdickung um einen Abstand (d) beabstandet ist, welcher zwischen 2 mm und 10 mm enthalten ist.

16. Einlassleitung eines Verbrennungsmotors, wie zum Beispiel eines Motors mit Turbokompression für ein Automobil, **dadurch gekennzeichnet, dass** sie wenigstens eine akustische Dämpfungsvorrichtung (101, 201, 301, 401, 501, 601, 701) nach einem der vorhergehenden Ansprüche umfasst.
